# FASCICULE DE BREVET EUROPEEN

(11) **EP 4 164 009 B1**
(45) Date de publication et mention de la délivrance du brevet: **04.12.2024**
(21) Numéro de dépôt: 22199407.2
(22) Date de dépôt: 03.10.2022
(51) Int. Cl.: H01M 6/40, H01M 10/04, H01M 10/0562, H01M 10/0585, H01M 50/502, H01M 50/512, H01M 50/514, H01M 50/564

(54) **BATTERIE À ÉLECTROLYTE SOLIDE**
FESTSTOFFBATTERIE
SOLID ELECTROLYTE BATTERY

(30) Priorité: 11.10.2021 FR 2110702
(43) Date de publication de la demande: 12.04.2023
(73) Titulaire: Commissariat à l'Energie Atomique et aux Energies Alternatives, 75015 Paris (FR)
(72) Inventeur: COLONNA, Jean-Philippe, 38054 GRENOBLE Cedex 09 (FR); BRUN, Jean, 38054 GRENOBLE Cedex 09 (FR); OUKASSI, Sami, 38054 GRENOBLE Cedex 09 (FR)
(74) Mandataire: Hautier IP

(56) Documents cités:
- US-A1- 2012 321 938
- US-A1- 2016 056 494
- US-A1- 2021 151 719

## Description

### DOMAINE TECHNIQUE

La présente invention concerne le domaine des dispositifs électrochimiques, dans le domaine du stockage d'énergie par voie électrochimique. Cela concerne les dispositifs à électrolyte solide sous forme de batterie, avantageusement de type micro batterie, de petite taille, c'est-à-dire de moins de 10cm², voire moins de 1 cm².

L'invention trouve pour application avantageuse la fabrication de dispositifs microélectroniques. Par dispositif microélectronique, on entend tout type de dispositif réalisé avec les moyens de la microélectronique. Ces dispositifs englobent notamment en plus des dispositifs à finalité purement électronique, des dispositifs micromécaniques ou électromécaniques (MEMS, NEMS...) ainsi que des dispositifs optiques ou optoélectroniques (MOEMS...).

### ETAT DE LA TECHNIQUE

Une microbatterie est un dispositif électrochimique composé de deux électrodes (positive et négative, encore dénommées respectivement cathode et anode) séparées par un isolant électrique (l'électrolyte).

Une micro batterie solide est définie selon l'état de la technique actuelle comme étant une batterie qui comporte les caractéristiques suivantes :
- toutes les couches actives (c'est-à-dire l'électrode positive, l'électrolyte, l'électrode négative) sont faites seulement de matériaux à l'état solide, de nature inorganique ; typiquement, cela signifie qu'il n'y a pas d'électrolyte en matériau polymère sous forme liquide ou de gel et pas de matériaux d'électrode qui contient des liants en polymère comme c'est le cas dans les batteries standards ;
- l'épaisseur individuelle de toutes les couches actives (c'est-à-dire l'électrode positive, l'électrolyte et l'électrode négative) est inférieure à 50 µm. De plus, l'épaisseur d'électrolyte est habituellement inférieure à 5 µm. Pour des batteries standard, l'épaisseur de chacune de ces couches est habituellement supérieure à 100 µm ;
- la superficie d'une micro batterie est généralement comprise entre 1 mm² jusqu'à 10 cm².

La miniaturisation des dispositifs nomades (objets connectés, implants médicaux,...) implique de pouvoir produire des sources d'énergie de petite taille (en particulier quelques mm²) capables de stocker une quantité d'énergie suffisante. La capacité d'une batterie est directement proportionnelle au volume de l'électrode positive, typiquement en oxyde de Cobalt lithié, de formule chimique LiCoO₂, souvent abrégé en Lico ou LCO.

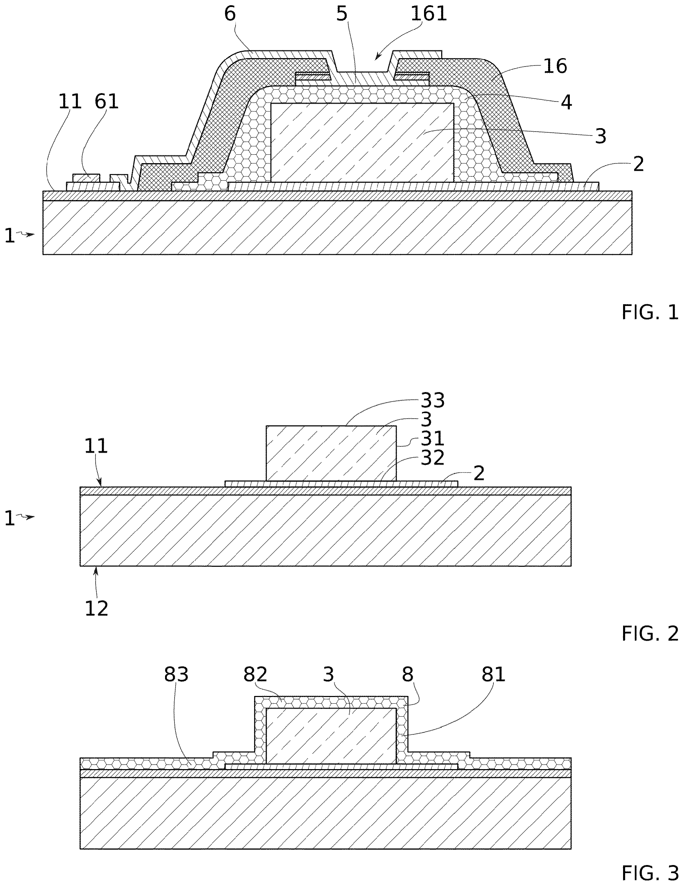

Dans une fabrication conventionnelle des microbatteries, comme le montre la figure 1 illustrant un empilement typique de microbatterie, un empilement est réalisé par des dépôts successifs sur un support 1 d'un premier collecteur de courant 2, d'une première électrode 3, d'un électrolyte 4 (ou conducteur ionique), d'une deuxième électrode 5, et d'un deuxième collecteur de courant 6 (qui peut prendre la forme d'une ligne de redistribution de courant. Une encapsulation, par le biais de dépôt d'une ou de plusieurs couches 16 supplémentaires de protection, ou par report de capot, est souvent nécessaire pour protéger le système de la réactivité chimique avec l'oxygène et la vapeur d'eau. Les collecteurs 2, 6 présentent chacun une portion de reprise de contact, restant accessible par l'extérieur de l'empilement de la microbatterie pour le raccordement électrique de cette dernière. Une cavité 161 dans la couche de protection 16 peut servir au deuxième collecteur 6, pour atteindre l'anode 5.

La migration d'un ou plusieurs ions entre les deux électrodes 3, 5 à travers l'électrolyte 4 permet, soit de stocker de l'énergie, soit de la délivrer vers un circuit externe.

La fabrication d'une telle structure occasionne actuellement des défauts, surtout lorsqu'une épaisseur importante de cathode est recherchée, ce qui est souvent le cas dans la mesure où cela conditionne directement la capacité de la batterie. On constate cependant une forte rugosité à la surface de la cathode, et ce d'autant plus que son épaisseur est élevée. Par exemple, le Lico présente une structure très colonnaire avec une surface granuleuse.

D'une manière générale et indépendamment de la question de la rugosité de la surface de la cathode, la recherche d'une épaisseur importante de cathode induit des difficultés de fabrication et des inconvénients structurels.

Un objet de la présente invention est donc de proposer une batterie améliorée et un procédé pour sa fabrication.

Les documents US 2012/321938 A1, US 2021/151719 A1 et US 2016/056494 A1 divulguent des batteries en couches minces comprenant une portion d'enrobage entourant, et au contact de la totalité de la paroi de flanc de la cathode, sans couvrir la face supérieure de la cathode; ainsi que des procédés de fabrication de telles batteries.

Les autres objets, caractéristiques et avantages de la présente invention apparaîtront à l'examen de la description suivante et des dessins d'accompagnement. Il est entendu que d'autres avantages peuvent être incorporés.

### RESUME

Pour atteindre cet objectif, selon un mode de réalisation on prévoit une batterie comprenant, empilés successivement au-dessus d'une première face d'un support, selon une direction d'empilement, au moins :
- une cathode comportant une face inférieure, une face supérieure et une paroi de flanc dirigée selon la direction d'empilement depuis la face inférieure jusqu'à la face supérieure,
- un électrolyte solide,
- une anode.

De manière avantageuse, la batterie comprend une portion d'enrobage entourant, et au contact de, la totalité de la paroi de flanc de la cathode, sans couvrir la face supérieure de la cathode, et au moins un élément de connexion électrique traversant la portion d'enrobage et débouchant sur la face supérieure de la portion d'enrobage et sur une deuxième face du support, opposée à la première face.

Grâce à la portion d'enrobage, la cathode se retrouve enterrée, c'est-à-dire ceinturée par un élément qui l'entoure. Cette disposition induit au moins l'un des avantages suivants.

La tenue mécanique de la cathode peut être accrue de par le renfort latéral dont elle dispose grâce à la portion d'enrobage ; cela peut notamment être utile lors de phases de fabrication, par exemple si la face supérieure de la cathode est travaillée mécaniquement, par exemple par un polissage, pour en améliorer l'état de surface ; ce renfort peut aussi être utile après fabrication, pour accroître le maintien de la cathode sur le support, notamment lorsque des épaisseurs importantes de cathode sont atteintes.

Éventuellement, la portion d'enrobage peut être obtenue après dépôt d'une couche d'enrobage recouvrant la face supérieure de la cathode, suivie d'un enlèvement, comprenant une action mécanique, de la partie de la couche d'enrobage couvrant la face supérieure de la cathode.

Un autre intérêt potentiel de la portion d'enrobage est de disposer d'une zone périphérique à la face supérieure de la cathode située à un même niveau, la portion d'enrobage affleurant la face supérieure ; on dispose ainsi d'une zone de dépôt d'autres couches (en particulier, mais non limitativement, un électrolyte et une anode) qui offre moins de contraintes de fabrication que des surfaces de déposition en creux comme ce serait le cas si la cathode était en relief relativement à la zone qui l'entoure ; suivant une possibilité, au moins une partie de la face supérieure de la portion d'enrobage est plane et dans la continuité de la face supérieure de la cathode, de sorte à former un ensemble plan, de préférence dirigée perpendiculairement à la direction d'empilement, la surface de cet ensemble étant particulièrement favorable au dépôt des couches ultérieures de réalisation de la batterie.

Un autre aspect concerne un procédé de fabrication d'une batterie, comprenant une formation d'un empilement comprenant successivement, selon une direction d'empilement, sur une première face d'un substrat, au moins:
- une cathode comportant une face inférieure, une face supérieure et une paroi de flanc dirigée selon la direction d'empilement depuis la face inférieure jusqu'à la face supérieure,
- un électrolyte,
- une anode,
comprenant en outre la formation d'une portion d'enrobage entourant, et au contact de, la totalité de la paroi de flanc de la cathode, sans couvrir la face supérieure de la cathode, comprenant : i. une formation d'une couche d'enrobage de sorte à recouvrir intégralement la cathode; ii. un amincissement de la couche d'enrobage jusqu'à exposer la face supérieure de la cathode, l'amincissement comprenant au moins une phase de polissage, une formation d'au moins un élément de connexion électrique, un amincissement du support par une deuxième face du support opposé à la première face, le polissage étant configuré pour exposer l'au moins un élément de connexion électrique sur la face supérieure de la portion d'enrobage et l'amincissement du support étant configuré pour exposer l'au moins un élément de connexion électrique sur la deuxième face du support.

Un autre aspect concerne aussi un système comprenant une pluralité de batteries. Ces dernières peuvent être juxtaposées et/ou superposées.

Un autre aspect est un dispositif microélectronique comprenant au moins une batterie.

### BREVE DESCRIPTION DES FIGURES

Les buts, objets, ainsi que les caractéristiques et avantages de l'invention ressortiront mieux de la description détaillée d'un mode de réalisation de cette dernière qui est illustré par les dessins d'accompagnement suivants dans lesquels :
La figure 1 représente un exemple d'empilement d'un dispositif électrochimique formant une batterie à électrolyte solide selon l'état de la technique.
Les figures 2 à 13 présentent une succession d'étapes de réalisation d'une batterie selon un mode de réalisation.
La figure 14 présente un exemple de système de batteries, ces dernières étant en superposition.
Les figures 15 à 18 présentent une autre suite d'étapes de réalisation d'une batterie.
La figure 19 présente un exemple d'empilement de batteries, ces dernières étant en superposition.
La figure 20 montre un exemple de formation, en plaque, d'une pluralité de batteries.
Les figures 21A, 21B, 21C présentent des exemples de niveaux de batteries dans une configuration de superposition de batteries.

Les dessins sont donnés à titre d'exemples et ne sont pas limitatifs de l'invention. Ils constituent des représentations schématiques de principe destinées à faciliter la compréhension de l'invention et ne sont pas nécessairement à l'échelle des applications pratiques. En particulier les épaisseurs ne sont pas forcément représentatives de la réalité.

### DESCRIPTION DÉTAILLÉE

Avant d'entamer une revue détaillée de modes de réalisation de l'invention, sont énoncées ci-après des caractéristiques optionnelles qui peuvent éventuellement être utilisées en association ou alternativement :
- Selon un exemple, la face supérieure 33 de la cathode 3 est plane et la portion d'enrobage comprend une face supérieure 71 présentant au moins une portion plane dans la continuité de la face supérieure 33 de la cathode 3 ;
- Selon un exemple, la portion d'enrobage comprend une portion principale 72 en un premier matériau et un revêtement de contact 73, en un deuxième matériau différent du premier matériau, le revêtement de contact 73 étant au contact de la paroi de flanc 31 de la cathode 3 et disposé entre la portion principale 72 et la paroi de flanc 31 de la cathode 3 ;
- Selon un exemple, l'au moins un élément de connexion électrique 9 comprend au moins un plot 92 d'un matériau électriquement conducteur, et notamment d'un matériau de brasure , ou encore d'un matériau déposable par électrolyse, notamment à base de cuivre, ou encore d'un matériau soudable sur son support, comme un plot d'aluminium ;
- Selon un exemple, un premier collecteur 2 de courant en continuité électrique avec la cathode 3, un deuxième collecteur 6 de courant en continuité électrique avec l'anode 5 et l'au moins un élément de connexion électrique 9 comprend au moins un premier élément de connexion électrique 9 raccordé au premier collecteur 2 de courant et au moins un deuxième élément de connexion électrique 9 raccordé au deuxième collecteur 6 de courant ;
- L'invention concerne aussi un système comprenant une pluralité de batteries telles que décrites précédemment.
- au moins deux batteries sont éventuellement superposées ;
- au moins un élément de connexion électrique 9 d'une des batteries est en continuité électrique avec un élément de connexion électrique 9 d'au moins une autre des batteries.
- la formation d'une couche d'enrobage comprend la formation d'une couche de revêtement 8 en un premier matériau sur, et au contact de, la cathode 3, puis la formation d'une couche principale 7 en un deuxième matériau, différent du premier matériau, sur, et au contact de, la couche de revêtement 8.
- le premier matériau est choisi plus résistant mécaniquement au polissage que le deuxième matériau.
- le polissage est appliqué à la couche principale 7, en utilisant la couche de revêtement 8 comme couche d'arrêt de polissage.
- une gravure de la couche de revêtement 8 est comprise, après le polissage, pour exposer la face supérieure 33 de la cathode 3.
- le polissage est appliqué jusqu'à exposer la surface supérieure 33 de la cathode 3.

Il est précisé que, dans le cadre de la présente invention, le terme « sur » ou « au-dessus » ne signifie pas obligatoirement « au contact de ». Ainsi, par exemple, le dépôt d'une couche sur une autre couche, ne signifie pas obligatoirement que les deux couches sont directement au contact l'une de l'autre mais cela signifie que l'une des couches recouvre au moins partiellement l'autre en étant, soit directement à son contact, soit en étant séparée d'elle par un film, ou encore une autre couche ou un autre élément. Cela étant, les couches de premier collecteur, de première électrode, d'électrolyte, la deuxième électrode et de deuxième collecteur s'empilent de préférence avec des surfaces de contact successives. Une couche ne couvre pas nécessairement toute la surface d'une partie sous-jacente.

Une couche peut par ailleurs être composée de plusieurs sous-couches d'un même matériau ou de matériaux différents.

On entend par un substrat, un élément, une couche ou autre « à base » d'un matériau M, un substrat, un élément, une couche comprenant ce matériau M uniquement ou ce matériau M et éventuellement d'autres matériaux, par exemple des éléments d'alliage, des impuretés ou des éléments dopants. Le cas échéant, le matériau M peut présenter différentes stoechiométries.

Il est précisé que dans le cadre de la présente invention, l'épaisseur d'une couche ou du substrat se mesure selon une direction perpendiculaire à la surface selon laquelle cette couche ou ce substrat présente son extension maximale. L'empilement du dispositif électrochimique est opéré suivant cette direction. Une direction latérale s'entend comme dirigée perpendiculairement à l'épaisseur du substrat.

Certaines parties du dispositif de l'invention peuvent avoir une fonction électrique. Certaines sont employées pour des propriétés de conduction électrique et on entend par électrode, collecteur ou équivalent, des éléments formés d'au moins un matériau ayant une conductivité électrique suffisante, dans l'application, pour réaliser la fonction souhaitée. À l'inverse, on entend par isolant électrique ou diélectrique un matériau qui, dans l'application, assure une fonction d'isolation électrique.

On entend par batterie un élément de stockage et de déstockage d'énergie électrique ; il comporte un empilement de composants, avec une cathode, un électrolyte solide et une anode. Cette batterie peut être de taille réduite telle que l'on parle de microbatterie, par exemple si la surface de contact entre la cathode et l'électrolyte, en projection suivant la direction d'empilement, est inférieure à 1cm², voire à 20 mm² ou même 10mm².

Un ensemble de batteries, toutes conformes à l'invention ou non, peut être réalisé. En particulier en superposant les batteries suivant la direction d'empilement de leurs couches. Certains éléments conducteurs peuvent servir, au travers d'une batterie donnée, à raccorder électriquement au moins une autre batterie de l'ensemble.

Avant de fournir des détails de modes de réalisation, notamment sur la base des illustrations, des remarques générales sur des aspects de l'invention sont ci-après formulées.

La portion d'enrobage peut être faite de plusieurs sous portions. Par exemple, elle comporte une sous portion, aussi ici appelée portion de revêtement de contact, destinée à être au contact direct de la cathode. Sans que cela ne soit limitatif, elle peut être plus fine que le reste de la portion d'enrobage. De préférence, cette sous portion est issue d'un dépôt conforme de matière, pour épouser assez régulièrement le contour de la cathode. La portion de revêtement peut s'étendre sur la première face du support.

La portion d'enrobage peut en complément comporter une portion principale, s'étendant latéralement depuis la portion de revêtement. Cette portion peut être plus volumineuse que l'autre, et notamment peut combler tout le volume entourant la cathode, sur une hauteur identique à l'épaisseur de la cathode. Elle peut être issue d'une formation « pleine plaque » d'une couche d'enrobage, sur une épaisseur supérieure à l'épaisseur finale souhaitée.

Suivant une autre possibilité, la portion d'enrobage comprend plus de deux portions, par exemple issues de plusieurs couches formées successivement en surface du support et sur la cathode.

Mais la portion d'enrobage peut aussi n'être formée que d'une portion, d'une seule matière, notamment à partir d'une seule étape de formation de couche d'enrobage.

La couche d'enrobage dont est issue la portion d'enrobage recouvre toute la cathode si bien que cette dernière n'est alors plus du tout exposée. Cependant, cela n'implique pas nécessairement que toutes les couches formées dans un premier temps pour créer la portion d'enrobage recouvrent toute la surface de la cathode. En particulier, la couche de formation de la portion de revêtement de contact peut être suffisamment fine pour ne pas absorber tout le relief de la face supérieure de la cathode, cette dernière pouvant présenter une forte rugosité à cette phase de fabrication. Il est possible que des crêtes de matériau de cathode subsistent en saillie de la couche de revêtement à ce stade. La couche de revêtement peut servir à consolider cette zone en anticipation du polissage qui suivra. Les crêtes seront alors progressivement étêtées sans que leur base ne soit rompue.

Alternativement, la couche de revêtement de contact peut couvrir la face supérieure de la cathode pour qu'aucun élément du relief de cette face ne reste exposé ; même dans ce cas, la couche de revêtement est, pour ce relief qu'elle épouse, un renfort mécanique appréciable pour le polissage.

Les éléments de connexion électrique 9 s'entendent de toute structure configurée pour conduire de l'électricité entre deux points. Les structures illustrées ne sont que des exemples. Plus généralement, ces éléments peuvent, pour certains, servir à connecter électriquement la cathode, de préférence via un premier collecteur de courant, d'au moins une batterie. D'autres ont vocation à connecter électriquement l'anode, de préférence via un deuxième collecteur, d'au moins une batterie. Ces éléments présentent de préférence une dimension principale dirigée selon la direction d'empilement.

Une structure de scellement est avantageusement formée pour isoler une ou plusieurs batteries de leur environnement. Elle forme de préférence un cadre fermé autour de l'empilement. Cette structure peut être formée en assemblant deux éléments de scellement chacun formé, respectivement sur une première batterie et sur une deuxième batterie, sur des faces en vis-à-vis.

Les figures 2 à 13 illustrent un premier exemple d'étapes successives permettant de parvenir à une batterie selon l'invention.

Un support 1 forme l'élément de départ. Il peut s'agir d'une plaque en matériau semi-conducteur, en silicium particulièrement. Cependant, d'autres substrats sont possibles, par exemple en verre. Par ailleurs, et particulièrement si le support comporte une base en matériau électriquement conducteur, il peut comprendre une couche superficielle en un matériau électriquement isolant, typiquement du dioxyde de silicium pour une base de support 1 en silicium.

Le support 1 va permettre la réalisation, en empilement, d'une pluralité de composants de la batterie. À moins qu'il n'en soit disposé autrement dans la suite de la description, la formation de ces composants peut mettre en oeuvre des étapes de photolithographie de dépôt de couches et de gravure pour obtenir le motif de composants souhaité. Typiquement, pour le dépôt des couches de l'empilement, on peut utiliser une technique de « dépôt physique en phase vapeur » connue sous le vocable anglais PVD pour Physical Vapor Déposition.

Une première face 11 du support porte un premier collecteur de courant 2. Le collecteur de courant 2 est raccordé à son électrode, ici la cathode 3, de sorte à établir une continuité électrique entre ces deux parties ; ce collecteur s'étend généralement latéralement au-delà de la cathode 3, vers l'extérieur du dispositif encapsulé.

À titre d'exemple, le premier collecteur 2 comprend au moins une couche métallique, par exemple à base de titane et/ou de platine. Notamment, il peut comprendre premièrement une fine couche de dioxyde de titane suivi d'une couche de platine.

L'empilement se poursuit avec la formation de la cathode 3.

Le matériau de la première électrode 3 peut être du LiCoO₂ comme indiqué précédemment). On donne en outre ci-après des exemples de matériaux aussi utilisables pour la première électrode 3 : V₂O₅, TiS₂, LiMn₂O₄, NaMnO₂, NaCoO₂. Après la formation du motif de la cathode 3, on lui fait généralement subir un recuit.

De préférence, l'épaisseur de la cathode 3 est supérieure ou égale à 10 µm, voire à 20 µm. Éventuellement, cette épaisseur peut être inférieure ou égale à 70 µm. On verra ultérieurement que de telles épaisseurs, importantes, peuvent être atteintes grâce à l'invention de par les dispositions structurelles et/ou de fabrication mises en oeuvre. On notera que, à cette étape, la cathode 3 représente potentiellement une surélévation importante au-dessus de la première face 11 du substrat 1. Elle comporte une partie de flanc 31 s'étendant de préférence suivant la direction de l'empilement des composants de la batterie (typiquement la dimension en épaisseur du support 1), une face inférieure 32 au contact du premier collecteur 2 et une face supérieure 33, opposée à la face inférieure 32. La face supérieure 33 est avantageusement plane suivant un plan perpendiculaire à la direction de l'empilement.

Habituellement, la fabrication se poursuivrait par la mise en place d'un électrolyte directement au-dessus de la cathode 3. Cependant, comme le montre la figure 3, on propose ici de former préalablement une portion d'enrobage de la cathode 3.

Pour y parvenir, dans le mode de réalisation de la figure 3, on commence par former une couche de revêtement de contact 8 configurée pour couvrir intégralement la cathode 3. À noter toutefois que la formation de la couche 8 n'est pas indispensable. En effet, on peut réaliser la portion d'enrobage sans recourir à cette étape.

La couche 8 présente une partie de flanc 81 couvrant le flanc 31 de la cathode 3, une partie supérieure 82 couvrant la face supérieure 33 de la cathode 3, et une partie basale 83 disposée au-dessus de la face 11 du support.

Comme indiqué précédemment, il est toutefois possible que des aspérités, en particulier des crêtes du relief de la face supérieure 33, restent saillantes au-delà de la couche de revêtement de contact 8. De préférence, la couche de revêtement 8 couvre également le reste de la face 11 du support. Cette couche peut être de nature minérale - par exemple en TEOS (Orthosilicate de tétraéthyle), en SiN, en SiON, ou de nature organique (par exemple avec un polymère photosensible ou non, tel que le parylène. La couche de revêtement de contact 8 peut être formée de plusieurs sous-couches de matériaux différents, par exemple suivant les exemples donnés ci-dessus. L'épaisseur de la couche de revêtement 8 peut être supérieure ou égale à 200 nanomètres et/ou inférieure ou égale à 10 µm.

Un premier intérêt potentiel de la couche de revêtement 8 est de servir de couche d'arrêt d'une phase ultérieure d'amincissement comprenant un polissage, décrite en détail plus loin. Alternativement, ou en complément, cette couche 8 peut avoir un rôle de protection afin d'éviter l'arrachement des grains du matériau de la cathode 3, typiquement du Lico.

Comme indiqué précédemment, le matériau de la cathode 3, surtout lorsque cette dernière est épaisse, peut présenter à sa surface exposée des irrégularités typiquement sous forme de pointes. Suivant un aspect non limitatif de l'invention, la couche 8 sert à maintenir les pointes lors de l'amincissement de la couche d'enrobage principal 7. Notamment, l'épaisseur de la couche 8 peut être inférieure à la hauteur maximale des pointes, et peut par exemple représenter entre 30 % et 75 % de la hauteur maximale des pointes. Dans ce cas, ces pointes font saillie au-delà de la couche 8, et sont ensuite recouvertes par la couche 7. Elles se retrouvent maintenues latéralement par la couche 8 lors de l'amincissement de la couche 7 qui conduit aussi à la consommation de l'extrémité saillante des pointes, sans pour autant les arracher à leur base. Même si la base des pointes subsiste, le relief de la cathode 3 en est nettement amoindri.

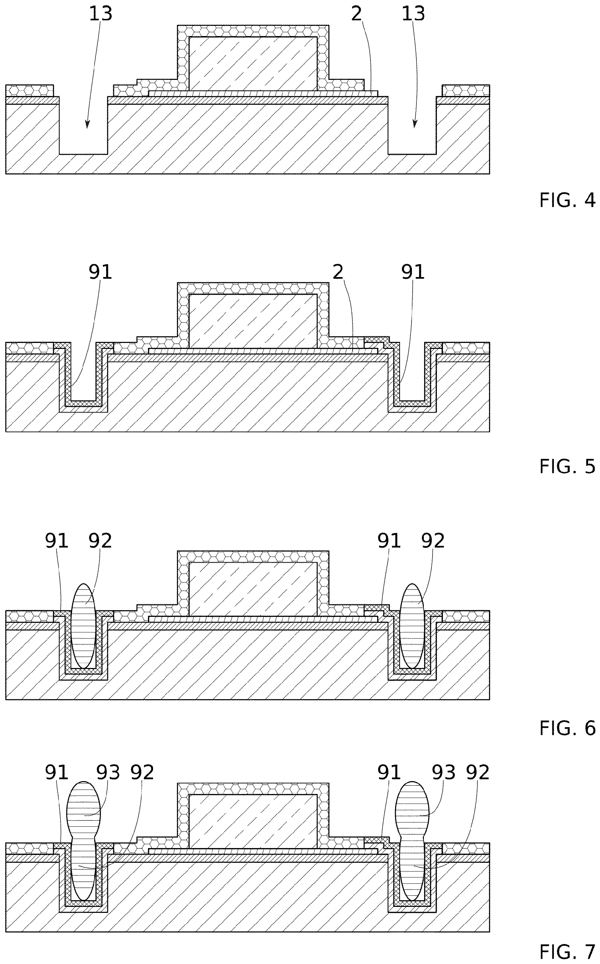

Selon l'invention, parallèlement à la formation de l'empilement de la batterie, on réalise au moins certaines étapes de réalisation d'éléments de connexion électrique 9. C'est ce que reflète la figure 4 dans laquelle une ou plusieurs cavités 13, par exemple sous forme de tranchées, sont réalisées dans le support 1, en traversant la couche de revêtement 8. Des étapes de gravure peuvent être mises en oeuvre à cet effet, ou encore une découpe à la scie. Cette mise en forme est configurée pour exposer une portion du premier collecteur 2 latéralement, relativement à la couche 8, pour la rendre accessible.

La figure 5 présente une étape suivante dans laquelle une partie électriquement conductrice est réalisée dans la cavité 13, sous forme de portion de paroi 91, qui peut être issue d'une métallisation. On peut par exemple avoir recours à une bicouche de titane et d'or. La portion 91 peut recouvrir l'ensemble de la surface de la cavité 13. Pour au moins certains éléments de connexion électrique 9, la portion 91 peut être au contact du premier collecteur 2, pour le raccordement électrique de la cathode 3. Comme indiqué précédemment, d'autres éléments de connexion électrique 9 peuvent avoir d'autres fonctions, notamment pour le raccordement électrique de l'anode 5. Dans la représentation de la figure 5, la portion 91 illustrée à droite de la cathode sert au raccordement du premier collecteur 2 ; la portion 91 illustrée à gauche de la cathode n'est pas raccordée au premier collecteur 2, et pourra servir au raccordement de l'anode 5 via un deuxième collecteur 6. Par ailleurs, et particulièrement lorsque le support 1 est électriquement conducteur, on peut également déposer une couche électriquement isolante avant de former la portion 91 ; on pourra graver cette couche isolante pour établir le contact électrique de la portion 91 avec le collecteur 2.

La formation d'éléments de connexion électrique 9 se poursuit pour chaque élément 9, par la réalisation d'un plot 92 en matériau électriquement conducteur, au contact de la portion 91, en particulier pour remplir au moins partiellement la cavité 13, et, de préférence, pour former un élément saillant au-delà de celle-ci.

On peut typiquement utiliser un matériau à base de plomb et/ou d'étain pour le plot 92, suivant la technologie connue sous le vocable «bump » (que l'on peut traduire par bossage). Cette solution est relativement peu coûteuse. Egalement, et en particulier si de tels bossages ont une forme de clou de type «stud bump », le plot 92 pourra être en or ou en aluminium.

Pour accroître la hauteur de l'élément de conduction électrique 9, la fabrication comprend avantageusement une phase supplémentaire de formation d'au moins un deuxième plot 93 dans la continuité électrique, et au-dessus, du plot 92, comme le montre la figure 7. On comprend que la structure obtenue est saillante au-delà de la première face 11 du support 11, latéralement à l'empilement comprenant la cathode 3. De préférence, la hauteur de cette structure est, à cette étape, supérieure ou égale, et de préférence strictement supérieure, à la hauteur de la face supérieure 33 de la cathode 3.

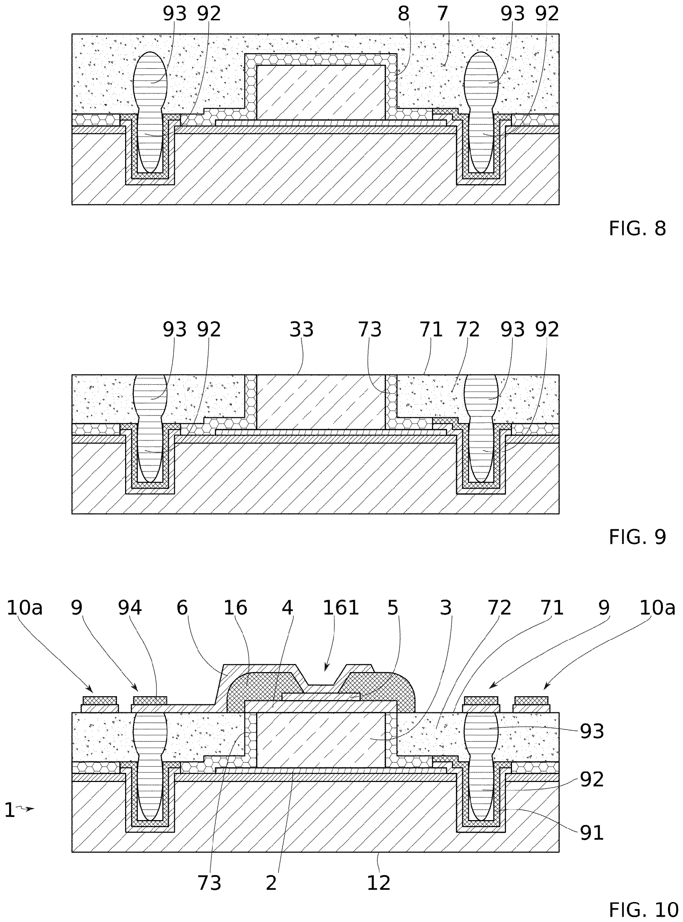

La figure 8 montre la formation d'une couche d'enrobage principal 7 qui recouvre tous les éléments précédemment formés sur la première face 11 du support 1.

Suivant une possibilité, la couche 7 peut être obtenue par moulage, par exemple en plaquant un moule contre le dispositif et en opérant une injection de matière polymère, à une température suffisante. On peut aussi recourir à un laminage, en laminant un film au-dessus de la couche de revêtement 8 et en procédant au fluage du matériau laminé par accroissement de température. On comprend que la cathode 3 est alors entièrement isolée de l'extérieur par l'enrobage formé, dans l'exemple illustré, de la couche de revêtement 8 et de la couche principale 7.

Sur cette base, on procède à un amincissement de cet enrobage jusqu'à obtenir la configuration de la figure 9. À cette figure, la face supérieure 33 de la cathode 3 est exposée, mais le reste de sa paroi reste protégé par une portion d'enrobage 72,73 formée par les parties résiduelles de la couche de revêtement de contact 8 et de la couche d'enrobage principal 7.

Pour parvenir à une telle configuration, l'amincissement comprend un polissage. Il peut s'agir d'une action uniquement mécanique, telle qu'un meulage ou un polissage à sec (connue sous le terme anglais Dry Polish), ou d'une action mécanique et chimique, telle qu'un polissage mécanochimique mettant en oeuvre, simultanément, une attaque mécanique et une attaque chimique par une solution adaptée à l'attaque d'au moins un des matériaux d'enrobage.

Suivant l'invention, le polissage s'effectue pour amincir la couche d'enrobage principal 7, en utilisant la partie supérieure de la couche de revêtement de contact 8 comme couche d'arrêt. Dans cette configuration, le polissage peut être mené à bien en s'arrêtant finement sur le revêtement 8.

Selon l'invention, le revêtement 8 peut être aminci, à vitesse inférieure, lors du polissage, pour réduire progressivement la rugosité de la face supérieure 33 de la cathode 3. De préférence, dans ce contexte, le matériau choisi pour la couche 8 est plus résistant mécaniquement au polissage (plus dur en particulier) que le matériau choisi pour la couche 7.

Suivant une première possibilité, le polissage assure l'exposition de la face 33 de la cathode 3. Soit par son action mécanique sur l'ensemble de l'enrobage, soit par son action mécanique complétée par une action chimique ciblant la couche de revêtement 8.

Suivant une autre possibilité, le polissage est arrêté avant d'exposer la face 33. La partie supérieure de la couche 8 est alors retirée par gravure, qui peut être une gravure sèche ou une gravure humide.

La configuration obtenue, visible la figure 9, montre que la cathode 3 est maintenue latéralement par la portion d'enrobage comprenant un revêtement de contact 73 issu de la couche de revêtement de contact 8, et une portion principale d'enrobage 72, issue de la couche d'enrobage principal 7.

Dans le cas où on met en oeuvre les étapes précédemment décrites pour amincir l'enrobage, on obtient une face supérieure 71 plane pour la portion d'enrobage. La face supérieure 71 est par ailleurs dans l'affleurement de la face supérieure 33 de la cathode 3. L'illustration montre une certaine extension latérale de la portion d'enrobage 72,73, mais elle peut être plus limitée. Elle couvre cependant toute la hauteur de la cathode 3 au moins sur une certaine distance, latéralement, à partir de cette dernière.

La figure 9 montre par ailleurs que les parties d'éléments de connexion électrique 9 précédemment formées, en particulier les plots 93, ont été exposées grâce à l'amincissement. Ainsi, les éléments 9 se trouvent également avantageusement noyés dans la portion d'enrobage 72,73, et leur exposition s'effectue sans étape supplémentaire.

On poursuit alors la réalisation de l'empilement de batteries. En figure 10, à partir de la face supérieure 33 de la cathode 3 et de la face supérieure 71 de la portion d'enrobage, on forme successivement un électrolyte 4, une anode 5, une couche de protection 16 et un deuxième collecteur 6. Dans la mesure où on bénéficie d'une surface plane pour ces actions supplémentaires, la fabrication est simplifiée, notamment parce que la cathode 3 n'est plus en relief relativement à la première face 11 du support 1 qui est généralement une topographie néfaste à la mise en oeuvre des dépôts de couches.

L'électrolyte 4 est réalisé de manière avantageuse par un conducteur ionique solide. Il peut s'agir de LiPON.

Dans une configuration dans laquelle la surface de la cathode 3 et son environnement forment une zone plane, l'anode 5 peut être plus large que dans une configuration standard, et notamment plus large que la cathode 3 ; cela peut être avantageux du point de vue du contrôle électrostatique. L'anode 5 peut par exemple être en conducteur métallique, notamment du titane. Le deuxième collecteur qui la recouvre peut préférentiellement être en cuivre ou en titane ou en tout autre matériau électriquement conducteur, de préférence métallique. Comme indiqué précédemment, une ouverture 161 dans la couche de protection 16 peut permettre le raccordement électrique de l'anode 5 tout en maintenant l'empilement protégé par la couche de protection 16. Cette dernière est par exemple en polyparaxylylène.

Pour le raccordement de l'anode 5, la formation du deuxième collecteur 6 peut être configurée pour le raccorder à au moins un élément de connexion électrique 9, typiquement celui représenté sur la gauche à la figure 10. Le raccordement électrique peut être finalisé par un élément de reprise de contact 94 par exemple en or.

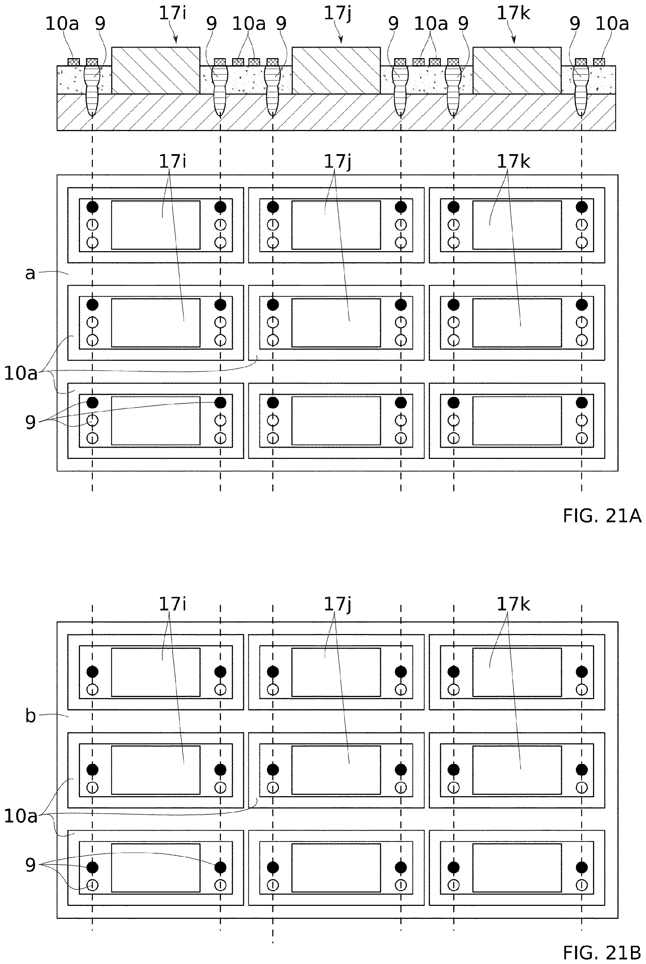

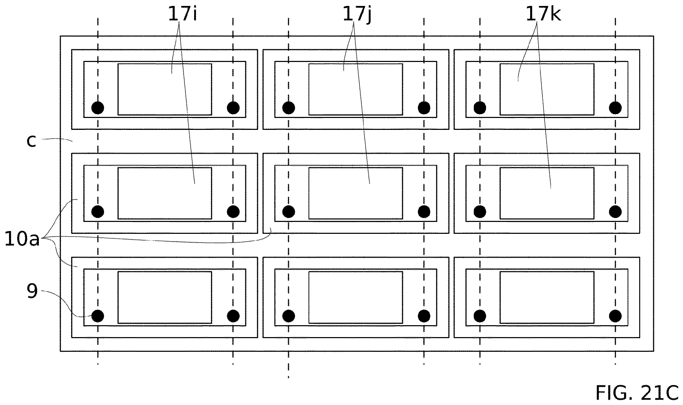

On peut par ailleurs aussi produire des éléments de scellement qui vont servir à isoler la batterie relativement à l'environnement extérieur. Dans le mode de réalisation présenté à la figure 10, on profite de la formation de certains éléments, en particulier le deuxième collecteur 6 et le contact 94, pour réaliser un cordon de scellement 10a. Ce dernier, qui n'est visible en figure 10 en vue de section, est avantageusement configuré pour former un contour fermé autour de la batterie. Un exemple de contour est donné à la figure 21A pour une batterie 17i.

La batterie ainsi formée peut être raccordé électriquement pour la rendre fonctionnelle, de manière conventionnelle. La reprise de contact électrique par la face avant présentée à la figure 10 le permet.

Des étapes ultérieures peuvent éventuellement servir à opérer une reprise de contact par la face arrière, la deuxième face 12, du support 1.

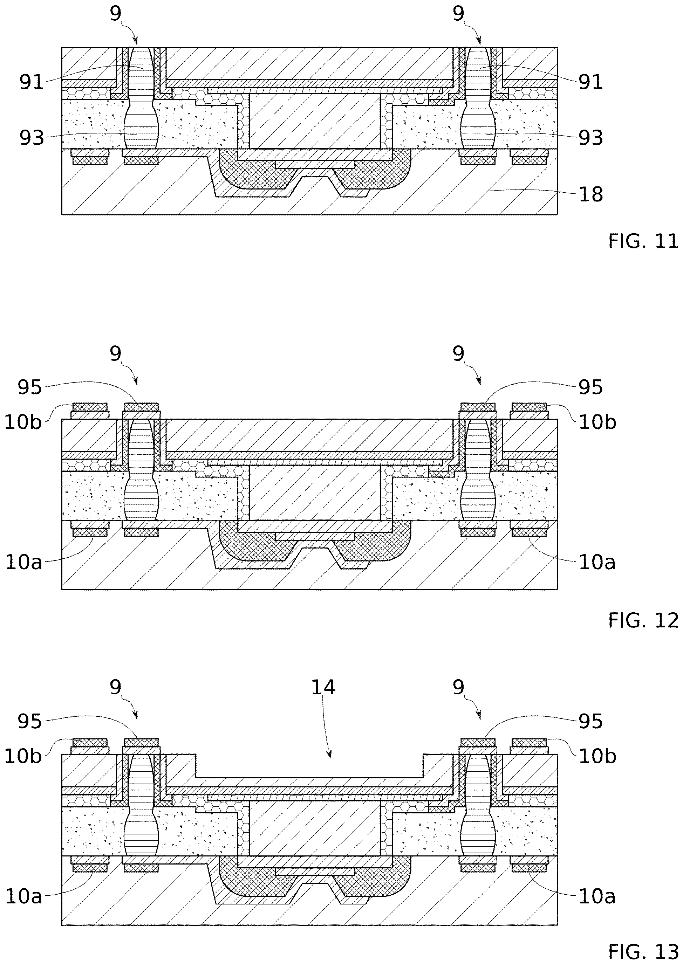

Ainsi, à la figure 11, la face avant, comportant l'empilement de batterie, a été encapsulée dans une couche d'encapsulation 18 (par exemple en polymère) et la deuxième face 12 du support a été amincie jusqu'à exposer les éléments de connexion électrique 9, par le fond des cavités 13.

L'étape suivante de la figure 12 comprend des dépôts métalliques permettant de réaliser des éléments de reprise de contact 95 en face arrière des éléments de connexion électrique 9, par exemple par un bicouche de titane et d'or. Comme précédemment, on peut profiter de cette formation pour réaliser un autre cordon de scellement 10b, de manière similaire à ce qui est proposé pour le cordon de scellement 10a sur l'autre face. Bien entendu, la réalisation particulière proposée pour le scellement n'est pas limitative ; elle tire profit de dépôts de couches métalliques et de phases de création de motifs réalisées à d'autres fins. On pourrait tout à fait reproduire le scellement par une étape distincte.

D'une manière générale, selon l'invention, il est possible de mettre en oeuvre une couche électriquement isolante à l'interface entre le support 1 et tout ou partie des organes électriquement conducteurs du dispositif ici présenté, et en particulier lorsque le support 1 est électriquement conducteur.

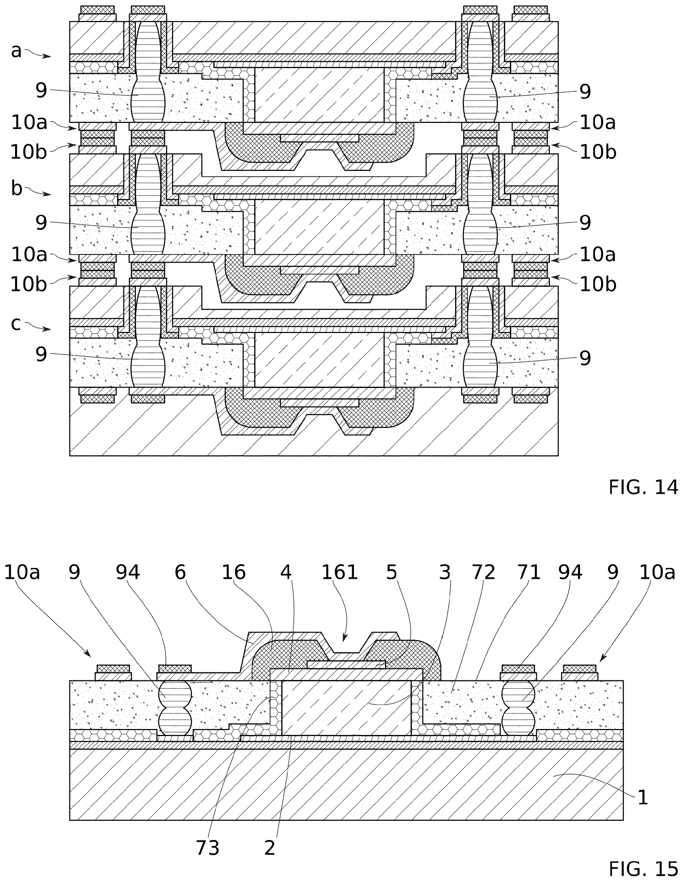

Éventuellement, un dégagement 14 peut être réalisé dans le support, dans une zone située en regard de l'empilement de batterie comprenant la cathode 3. Une gravure peut être mise en oeuvre à cet effet. Cette disposition définit un volume qui peut être utile pour empiler des batteries, comme cela est représenté en figure 14.

En effet, le dégagement 14 est configuré pour accueillir, au moins partiellement, une batterie superposée. Un intérêt de cette disposition est de pouvoir accommoder les dilatations de la batterie lors de la charge.

Dans la configuration représentée à la figure 14, trois niveaux de batteries a, b, c sont superposées. Ce nombre est cependant purement indicatif. De préférence, le niveau inférieur, niveau c, présente un empilement de batterie encapsulé dans une couche 18. Par sa face opposée, cette batterie reçoit une batterie d'un niveau b. Un raccordement électrique est produit entre ces deux niveaux par l'intermédiaire des éléments de connexion électrique 9. Le montage ici illustré forme un circuit en parallèle, les électrodes positives des batteries étant raccordées à un noeud commun, formé par la continuité de certains éléments de connexion électrique 9, typiquement ceux représentés sur la droite de la figure 14. Similairement, les anodes des batteries sont ici raccordées par d'autres éléments de connexion électrique 9, qui sont ceux de gauche à la figure 14.

Un raccordement équivalent est opéré entre les niveaux b et a. Le dernier niveau, opposé à celui présenté en partie inférieure de l'empilement de batteries, peut ici servir au raccordement extérieur de la batterie, par l'intermédiaire de la portion exposée des éléments de connexion 9 qu'il comprend.

On verra ultérieurement que d'autres schémas de raccordement électrique sont possibles.

D'autre part, grâce aux cordons de scellement 10a, 10b, on peut produire un assemblage périphérique des batteries, les cordons créant un volume interne au sein duquel se situe un empilement d'une batterie.

L'assemblage entre les niveaux, qu'il s'agisse des cordons de scellement 10a, b et/ou des éléments de connexion électrique 9, peut être réalisé par collage direct, brasure ou thermocompression. On notera l'avantage de disposer d'une interface or/or dans ce contexte, de par la qualité de contact obtenu et la capacité de coller à froid.

De préférence, l'assemblage des batteries s'effectue sous vide ou sous un flux de gaz neutre, tel que l'argon.

Dans l'intégration précédemment décrite, une partie du substrat, par exemple de silicium, est conservée ce qui est avantageux pour la tenue mécanique, en particulier lorsqu'un scellement métallique (notamment or/or) est mis en oeuvre. Pour autant, les contraintes et la tenue mécanique dépendent beaucoup de la surface de la batterie. Dans certains cas, il est possible de retirer complètement le support 1 et de modifier la structure pour disposer d'un volume de dilatation d'empilement de batterie de manière alternative au cas précédent.

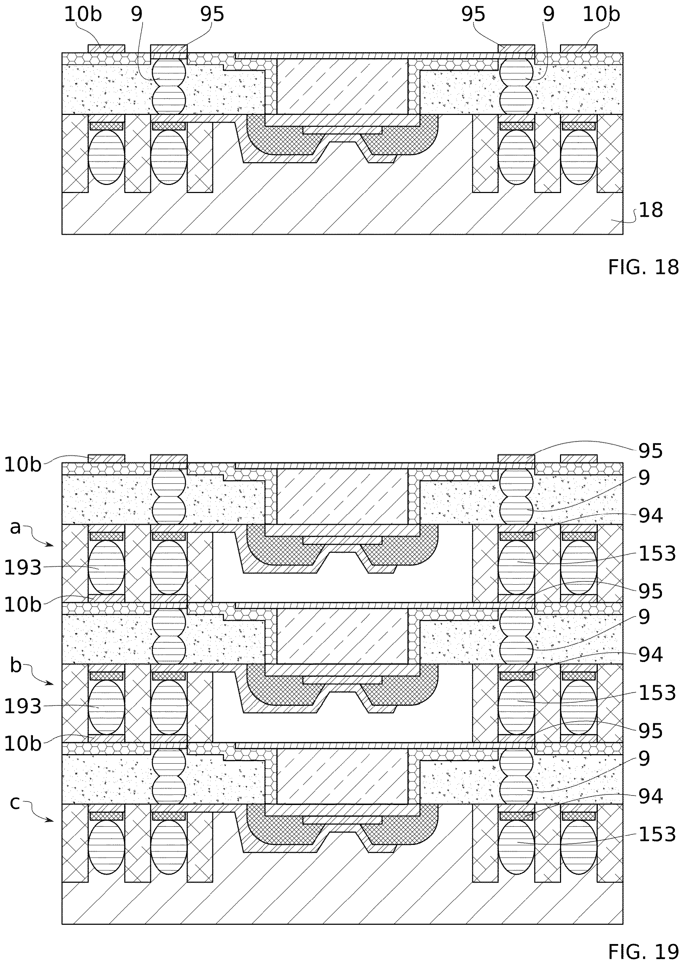

C'est cette possibilité que montrent les figures 15 à 19, avec, dans le cas de la figure 19, une alternative de configuration d'empilement de batteries.

La figure 15 montre une structure assez similaire à celle obtenue à la figure 10. Pour y parvenir, on pourra se reporter à la description du précédent mode de réalisation pour toutes les parties communes.

De manière distincte, on recherche préférentiellement en figure 15 une reprise de contact en face avant, c'est-à-dire du côté de l'empilement de batterie, pour raccorder cette dernière à d'autres batteries en superposition. Ainsi, les éléments de connexion électrique 9 ne traversent pas nécessairement le support, dans des cavités 13, dans cette option. Ils peuvent être réalisés au-dessus de la première face 11 du support 1. Dans l'exemple représenté à la figure 15, comme précédemment, ils présentent un ou plusieurs plots traversant l'épaisseur de la portion d'enrobage, ici dans la partie 72.

Toujours comme précédemment, la figure 15 montre une portion d'enrobage avec deux parties successives 72,73, mais il est rappelé que cette réalisation n'est pas limitative. Une seule partie peut suffire, ou plus de deux parties peuvent être mises en oeuvre.

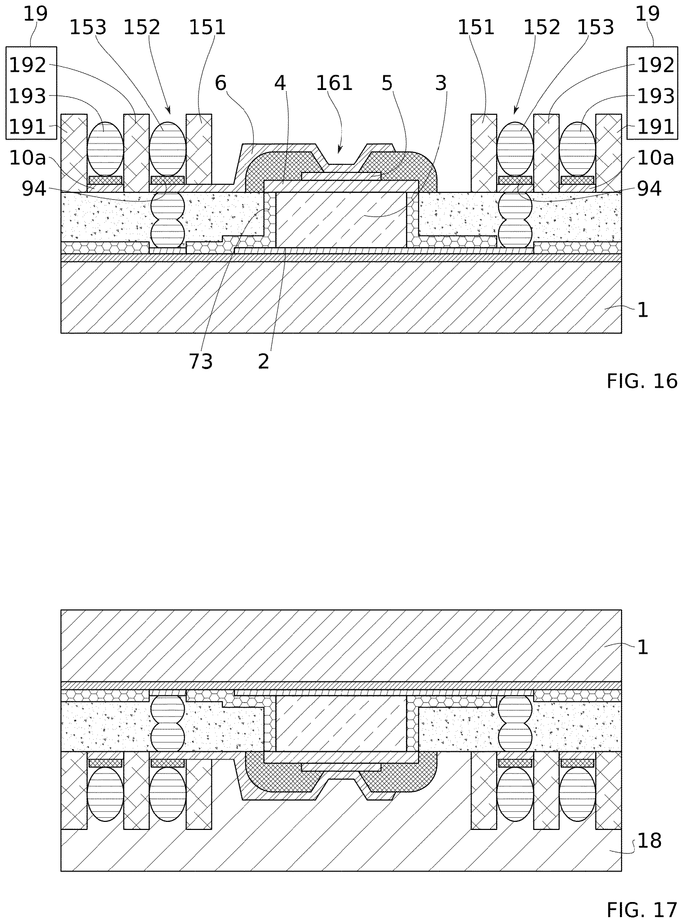

L'étape de la figure 16 permet de produire un volume résiduel autour de l'empilement comprenant l'électrolyte et l'anode. À cet effet, on forme, autour de l'empilement de batterie et au-dessus de la face 71 de la portion d'enrobage, un cadre de scellement 19. Ce dernier présente une dimension en épaisseur supérieure à celle de l'empilement de batteries, typiquement pour qu'un espace subsiste au-dessus de cet empilement, et en particulier au-dessus du deuxième collecteur 6.

Le cadre de scellement 19 peut être réalisé par l'intermédiaire de la formation d'un mur externe 191 et d'un mur interne 192 dont l'espace interstitiel est ensuite rempli par un matériau de remplissage 193. Plus précisément, des étapes de lithographie et de laminage peuvent être utilisées pour la réalisation des murs 191,192. Le matériau de remplissage 193 peut être déposé par sérigraphie d'une crème à braser, ou par électrolyse.

Pour les murs, on peut utiliser un matériau polymère diélectrique photosensible du type du type SiNR vendu sous la marque Shin-Etsu^{®}, sous forme de films secs ou par étalement à la tournette.

Comme précédemment, mais non limitativement, il est avantageux de procéder à des phases de construction de raccordement électrique en même temps que la construction du scellement.

C'est ce qui est aussi proposé à la figure 16. Ainsi, une tranchée de connexion 152 est définie au moyen d'un mur supplémentaire 151 disposée plus à l'intérieur que le mur intérieur 192 relativement à l'empilement de batterie. Le mur 151 peut être réalisé en même temps que les murs 191, 192. Également, un remplissage de la tranchée 152 ainsi définie entre le mur 151 et le mur 192 est possible. On peut aussi utiliser de la crème à braser. Cette fois, contrairement au remplissage 193, on cherchera de préférence à former un remplissage discontinu, essentiellement en continuité électrique des éléments 9, sans remplir totalement la tranchée 152. Les collecteurs peuvent être raccordés électriquement par intermédiaire d'éléments de connexion électrique, suivant différentes configurations. Notamment, comme présenté aux figures 16 à 19, la tranchée 152 peut servir à produire un élément 9 en continuité électrique avec le deuxième collecteur 6, par le dessous du mur 151 lequel, dans ce cas, surmonte au moins une partie du deuxième collecteur 6 qui se prolonge ainsi vers l'élément 9 de la tranchée 152. Cependant, d'autres situations sont envisageables, comme la préservation d'une partie de la surface sans le mur 151, pour qu'il n'y interrompe pas le deuxième collecteur 6.

La figure 17 présente une étape similaire à celle de la figure 11, avec la création d'une encapsulation 18 pour un premier exemple de configuration de batterie d'un ensemble de batteries à superposer. Cet exemple peut constituer un niveau d'extrémité de la superposition.

Dans ce mode de réalisation, le support initial 1 est totalement retiré comme le révèle la figure 18. Ainsi, en face arrière, le support a disparu et les éléments de connexion électrique 9 sont accessibles pour un raccordement électrique. Comme précédemment, cela peut passer par la formation d'un élément de reprise de contact 95, par exemple sous forme de métallisation, pouvant comprendre une couche superficielle d'or, et par exemple un bicouche titane/or.

Toujours comme précédemment, on peut mettre à profit la phase de métallisation pour former les contacts 95 pour réaliser des cordons de scellement 10b, étant rappelé que de tels cordons pourraient être réalisés séparément.

Sur la base de la structure de la figure 18, on peut superposer d'autres batteries, comme le montre la figure 19, avec trois niveaux représentés. Cette fois, c'est la fonction d'entretoise du cadre de scellement 19 qui préserve un volume intérieur de logement des empilements de batteries.

Le scellement peut être réalisé de manière équivalente au cas précédent, notamment avec une interface de collage or/or. De même, les éléments de connexion électrique 9 peuvent être raccordés successivement par niveau selon la configuration électrique souhaitée.

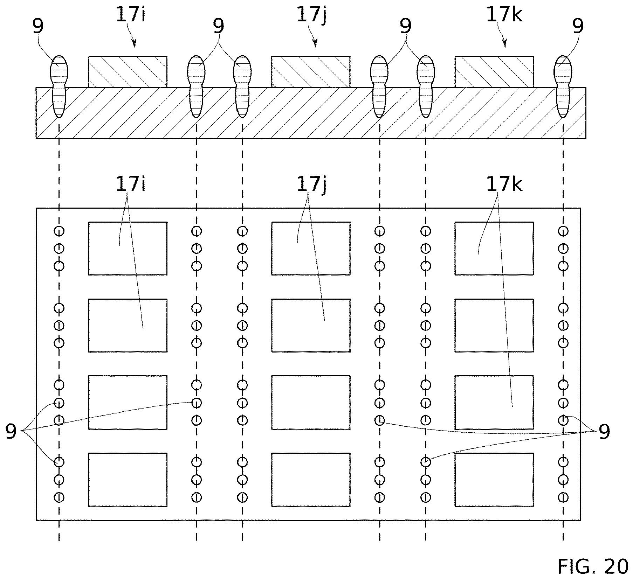

À ce sujet, la figure 20 montre différentes possibilités, non conformes à l'invention.

Suivant un aspect, elle illustre la capacité de disposer d'une pluralité de batteries 17i, j, k sur un même niveau, avec, dans l'exemple, une matrice de 12 batteries. Notamment, dans ce cas, les batteries peuvent partager, au moins durant la fabrication, un même support ou encore une même portion d'enrobage 72,73. Elles peuvent ensuite être singularisées, ou non.

Suivant un autre aspect, cette figure reflète que les éléments de connexion électrique 9 peuvent être réalisés de manière commune. Par exemple, une même tranchée ici schématisée par une ligne pointillée peut être formée pour réaliser les cavités 13 ou les tranchées 152 de plusieurs batteries juxtaposées. Ensuite, au sein de ces tranchées, on réalise les éléments de conduction électrique 9 de manière individualisée.

On comprend que les batteries ici proposées permettent une organisation en juxtaposition, comme le montre la figure 20, ou en superposition, comme l'ont montré les figures 14 et 19.

Les possibilités multiples d'arrangement sont aussi révélées par l'exemple des figures 21A à 21C, non conformes à l'invention.

La figure 21A montre un niveau a de batteries en vue d'une superposition avec deux autres niveaux b, c. Ce niveau comprend une pluralité d'éléments de conduction électrique 9.

Lorsqu'un raccordement en série et/ou en parallèle est à réaliser entre les batteries superposées, deux éléments de conduction électrique 9 par batteries peuvent suffire (un pour l'anode, un pour la cathode).

Cependant, on peut aussi procéder à un adressage individuel des batteries superposées, de sorte à les raccorder individuellement à l'extérieur. Pour y parvenir, pour chaque succession de batteries en superposition, on dispose d'au moins deux fois plus d'élément de conduction électrique 9 que de niveaux. Dans le cas représenté par exemple, une batterie 17i comprend six éléments de connexion électrique 9 (c'est-à-dire un nombre suffisant pour raccorder électriquement les deux électrodes de chaque batterie, sur les trois niveaux).

Dans ce contexte, deux premiers éléments de connexion électrique 9 vont servir au raccordement électrique de la batterie 17i de ce niveau, ce qui est schématisé à la figure 21A par un remplissage grisé des deux éléments 9 correspondant. Les quatre autres éléments 9 d'une batterie 17i, j, k vont servir à la continuité électrique vers des batteries d'autres niveaux.

Ainsi, la figure 21B montre un niveau de batteries b dans lequel deux éléments de connexion 9, schématisés par un remplissage grisé, dans la continuité de deux éléments de connexion électrique 9 du niveau a précédent, vont servir à raccorder électriquement la cathode 3 est l'anode 5 d'une batterie 17i, j, k du niveau b.

Enfin, les batteries du niveau c comportent deux éléments de connexion 9 pour le raccordement de leur cathode et de leur anode. Ces éléments sont dans la continuité d'éléments 9 des niveaux inférieurs.

Ainsi, on peut raccorder individuellement des batteries de différents niveaux, au travers de structures traversantes de raccordement électrique formées par la superposition d'éléments de connexion 9.

Dans la solution représentée aux figures 21A à 21C, toutes les batteries du système de batteries sont indépendantes. On pourrait aussi, sans sortir du cadre de l'invention, raccordés en série ou en parallèle tout ou partie des batteries d'un niveau, et raccorder électriquement chaque niveau de manière indépendante.

L'invention n'est pas limitée aux modes de réalisation précédemment décrits et s'étend à tous les modes de réalisation couverts par l'invention.

## Revendications

1. Batterie comprenant, empilés successivement au-dessus d'une première face (11) d'un support (1), selon une direction d'empilement, au moins :
• une cathode (3) comportant une face inférieure (32), une face supérieure (33) et une paroi de flanc (31) dirigée selon la direction d'empilement depuis la face inférieure (32) jusqu'à la face supérieure (33),
• un électrolyte (4) solide,
• une anode (5),
**caractérisée en ce qu'**elle comprend :
• une portion d'enrobage entourant, et au contact de, la totalité de la paroi de flanc (31) de la cathode (3), sans couvrir la face supérieure (33) de la cathode (3), la portion d'enrobage comprenant une face supérieure (71), et
• au moins un élément de connexion électrique (9) traversant la portion d'enrobage et débouchant sur la face supérieure (71) de la portion d'enrobage et sur une deuxième face (12) du support (1), opposée à la première face (11).

2. Batterie selon la revendication précédente, dans laquelle la face supérieure (33) de la cathode (3) est plane et dans laquelle la face supérieure (71) de la portion d'enrobage présente au moins une portion plane dans la continuité de la face supérieure (33) de la cathode (3).

3. Batterie selon l'une quelconque des revendications précédentes, dans laquelle la portion d'enrobage comprend une portion principale (72) en un premier matériau et un revêtement de contact (73), en un deuxième matériau différent du premier matériau, le revêtement de contact (73) étant au contact de la paroi de flanc (31) de la cathode (3) et disposé entre la portion principale (72) et la paroi de flanc (31) de la cathode (3).

4. Batterie selon l'une quelconque des revendications précédentes, dans laquelle l'au moins un élément de connexion électrique (9) comprend au moins un plot (92) d'un matériau électriquement conducteur.

5. Batterie selon l'une quelconque des revendications précédentes, comprenant un premier collecteur (2) de courant en continuité électrique avec la cathode (3), un deuxième collecteur (6) de courant en continuité électrique avec l'anode (5) et dans laquelle l'au moins un élément de connexion électrique (9) comprend au moins un premier élément de connexion (9) électrique raccordé au premier collecteur (2) de courant et au moins un deuxième élément de connexion électrique (9) raccordé au deuxième collecteur (6) de courant.

6. Système comprenant une pluralité de batteries selon l'une quelconque des revendications précédentes.

7. Système selon la revendication précédente, dans lequel la pluralité de batteries est selon la revendication 5 et dans lequel au moins deux batteries sont superposées.

8. Système selon la revendication précédente, dans lequel au moins un élément de connexion électrique (9) d'une des batteries est en continuité électrique avec un élément de connexion électrique (9) d'au moins une autre des batteries.

9. Procédé de fabrication d'une batterie, comprenant une formation d'un empilement comprenant successivement, selon une direction d'empilement, sur une première face d'un substrat (1), au moins :
• une cathode (3) comportant une face inférieure (32), une face supérieure (33) et une paroi de flanc (31) dirigée selon la direction d'empilement depuis la face inférieure (32) jusqu'à la face supérieure (33),
• un électrolyte (4),
• une anode (5),
**caractérisé en ce qu'**il comprend :
• une formation d'une portion d'enrobage entourant, et au contact de, la totalité de la paroi de flanc (31) de la cathode (3), sans couvrir la face supérieure (33) de la cathode (3), la formation de la portion d'enrobage comprenant :
i. une formation d'une couche d'enrobage de sorte à recouvrir intégralement la cathode (3) ;
ii. un amincissement de la couche d'enrobage jusqu'à exposer la face supérieure (33) de la cathode (3), l'amincissement comprenant au moins une phase de polissage,
• une formation d'au moins un élément de connexion électrique (9),
• un amincissement du support (1) par une deuxième face (12) du support (1) opposé à la première face (11),
le polissage étant configuré pour exposer l'au moins un élément de connexion électrique (9) sur la face supérieure (33) de la portion d'enrobage et l'amincissement du support (1) étant configuré pour exposer l'au moins un élément de connexion électrique (9) sur la deuxième face (12) du support (1).

10. Procédé selon la revendication précédente, dans lequel la formation d'une couche d'enrobage comprend la formation d'une couche de revêtement (8) en un premier matériau sur, et au contact de, la cathode (3), puis la formation d'une couche principale (7) en un deuxième matériau, différent du premier matériau, sur, et au contact de, la couche de revêtement (8).

11. Procédé selon la revendication précédente, dans lequel le premier matériau est choisi plus résistant mécaniquement au polissage que le deuxième matériau.

12. Procédé selon l'une des revendications 10 à 11, dans lequel le polissage est appliqué à la couche principale (7), en utilisant la couche de revêtement (8) comme couche d'arrêt de polissage.

13. Procédé selon la revendication précédente, comprenant une gravure de la couche de revêtement (8), après le polissage, pour exposer la face supérieure (33) de la cathode (3).

14. Procédé selon l'une des revendications 9 à 11, dans lequel le polissage est appliqué jusqu'à exposer la surface supérieure (33) de la cathode (3).

## Patentansprüche

1. Batterie, nacheinander über einer ersten Seite (11) einer Unterlage (1) entlang einer Stapelrichtung gestapelt, mindestens umfassend:
• eine Kathode (3), die eine Unterseite (32), eine Oberseite (33) und eine Seitenwand (31) enthält, die entlang der Stapelrichtung von der Unterseite (32) bis zur Oberseite (33) gerichtet ist,
• einen festen Elektrolyt (4),
• eine Anode (5),
**dadurch gekennzeichnet, dass** sie umfasst:
• einen Umhüllungsabschnitt, der die gesamte Seitenwand (31) der Kathode (3) umgibt und mit ihr in Kontakt kommt, ohne die Oberseite (33) der Kathode (3) zu bedecken, wobei der Umhüllungsabschnitt eine Oberseite (71) umfasst, und
• mindestens ein elektrisches Verbindungselement (9), das den Umhüllungsabschnitt durchdringt und zur Oberseite (71) des Umhüllungsabschnitts und in einer zweiten Seite (12) der Unterlage (1), die der ersten Seite (11) gegenüberliegt, ausmündet.

2. Batterie nach dem vorhergehenden Anspruch, wobei die Oberseite (33) der Kathode (3) planar ist, und wobei die Oberseite (71) des Umhüllungsabschnitts mindestens einen planaren Abschnitt in Kontinuität mit der Oberseite (33) der Kathode (3) aufweist.

3. Batterie nach einem der vorhergehenden Ansprüche, wobei der Umhüllungsabschnitt einen Hauptabschnitt (72) aus einem ersten Material umfasst und eine Kontaktbeschichtung (73) aus einem zweiten Material, das sich vom ersten Material unterscheidet, wobei die Kontaktbeschichtung (73) in Kontakt mit der Seitenwand (31) der Kathode (3) steht und zwischen dem Hauptabschnitt (72) und der Seitenwand (31) der Kathode (3) angeordnet ist.

4. Batterie nach einem der vorhergehenden Ansprüche, wobei das mindestens eine elektrische Verbindungselement (9) mindestens ein Pad (92) aus einem elektrisch leitenden Material umfasst.

5. Batterie nach einem der vorhergehenden Ansprüche, einen ersten Stromkollektor (2) in elektrischer Kontinuität mit der Kathode (3) und einen zweiten Stromkollektor (6) in elektrischer Kontinuität mit der Anode (5) umfassend, und wobei das mindestens eine elektrische Verbindungselement (9) mindestens ein erstes elektrisches Verbindungselement (9) umfasst, das an den ersten Stromkollektor (2) angeschlossen ist, und mindestens ein zweites elektrisches Verbindungselement (9), das an den zweiten Stromkollektor (6) angeschlossen ist.

6. System, eine Vielzahl von Batterien nach einem der vorhergehenden Ansprüche umfassend.

7. System nach dem vorhergehenden Anspruch, wobei die Vielzahl von Batterien nach Anspruch 5 ist, und wobei mindestens zwei Batterien übereinander liegen.

8. System nach dem vorhergehenden Anspruch, wobei mindestens ein elektrisches Verbindungselement (9) einer der Batterien mit einem elektrischen Verbindungselement (9) mindestens einer anderen der Batterien in elektrischer Kontinuität steht.

9. Verfahren zur Herstellung einer Batterie, eine Bildung eines Stapels umfassend, der nacheinander, entlang einer Stapelrichtung, auf einer ersten Seite eines Substrats (1) mindestens umfasst:
• eine Kathode (3), die eine Unterseite (32), eine Oberseite (33) und eine Seitenwand (31) enthält, die entlang der Stapelrichtung von der Unterseite (32) bis zur Oberseite (33) gerichtet ist,
• einen Elektrolyt (4),
• eine Anode (5),
**dadurch gekennzeichnet, dass** es umfasst:
• eine Bildung eines Umhüllungsabschnitts, der die gesamte Seitenwand (31) der Kathode (3) umgibt und mit ihr in Kontakt kommt, ohne die Oberseite (33) der Kathode (3) zu bedecken, wobei die Bildung des Umhüllungsabschnitts umfasst:
i. eine Bildung einer Umhüllungsschicht, die die Kathode (3) vollständig bedeckt;
ii. eine Ausdünnung der Umhüllungsschicht bis zur Freilegung der Oberseite (33) der Kathode (3), wobei die Ausdünnung mindestens eine Polierphase umfasst,
• eine Bildung von mindestens einem elektrischen Verbindungselement (9),
• eine Ausdünnung der Unterlage (1) durch eine zweite Seite (12) der Unterlage (1), die der ersten Seite (11) gegenüberliegt,
wobei das Polieren konfiguriert ist, um mindestens ein elektrisches Verbindungselement (9) auf der Oberseite (33) des Umhüllungsabschnitts freizulegen, und die Ausdünnung der Unterlage (1) konfiguriert ist, um mindestens ein elektrisches Verbindungselement (9) auf der zweiten Seite (12) der Unterlage (1) freizulegen.

10. Verfahren nach dem vorhergehenden Anspruch, wobei die Bildung einer Umhüllungsschicht die Bildung einer Beschichtungsschicht (8) aus einem ersten Material auf, und in Kontakt mit, der Kathode (3) umfasst, und dann die Bildung einer Hauptschicht (7) aus einem zweiten Material, das sich vom ersten Material unterscheidet, auf, und in Kontakt mit, der Beschichtungsschicht (8).

11. Verfahren nach dem vorhergehenden Anspruch, wobei das erste Material mechanisch widerstandsfähiger gegen Polieren als das zweite Material gewählt wird.

12. Verfahren nach einem der Ansprüche 10 bis 11, wobei das Polieren an der Hauptschicht (7) angewandt wird, wobei die Beschichtungsschicht (8) als Polierstoppschicht verwendet wird.

13. Verfahren nach dem vorhergehenden Anspruch, eine Ätzung der Beschichtungsschicht (8) umfassend, nach dem Polieren, um die Oberseite (33) der Kathode (3) freizulegen.

14. Verfahren nach einem der Ansprüche 9 bis 11, wobei das Polieren angewendet wird, bis die obere Oberfläche (33) der Kathode (3) freigelegt ist.

## Claims

1. A battery comprising, stacked successively above a first face (11) of a support (1), in a stacking direction, at least:
• one cathode (3) including a lower face (32), an upper face (33) and a side wall (31) directed in the stacking direction from the lower face (32) to the upper face (33),
• one solid electrolyte (4),
• one anode (5),
**characterised in that** it comprises:
• a coating portion surrounding, and in contact with, the entire side wall (31) of the cathode (3), without covering the upper face (33) of the cathode (3), the coating portion comprising an upper face (71), and
• at least one electrical connection element (9) passing through the coating portion and opening onto the upper face (71) of the coating portion and onto a second face (12) of the support (1), which is opposite the first face (11).

2. The battery according to the preceding claim, wherein the upper face (33) of the cathode (3) is planar and wherein the upper face (71) of the coating portion has at least one planar portion in the continuity of the upper face (33) of the cathode (3).

3. The battery according to any one of the preceding claims, wherein the coating portion comprises a main portion (72) made of a first material and a contact coating (73), made of a second material which is different from the first material, the contact coating (73) being in contact with the side wall (31) of the cathode (3) and disposed between the main portion (72) and the side wall (31) of the cathode (3).

4. The battery according to any one of the preceding claims, wherein the at least one electrical connection element (9) comprises at least one pad (92) of an electrically conductive material.

5. The battery according to any one of the preceding claims, comprising a first current collector (2) in electrical continuity with the cathode (3), a second current collector (6) in electrical continuity with the anode (5) and wherein the at least one electrical connection element (9) comprises at least one first electrical connection element (9) connected to the first current collector (2) and at least one second electrical connection element (9) connected to the second current collector (6).

6. A system comprising a plurality of batteries according to any one of the preceding claims.

7. The system according to the preceding claim, wherein the plurality of batteries is according to claim 5 and wherein at least two batteries are superimposed.

8. The system according to the preceding claim, wherein at least one electrical connection element (9) of one of the batteries is in electrical continuity with an electrical connection element (9) of at least one other of the batteries.

9. A method for manufacturing a battery, comprising forming a stack comprising successively, in a stacking direction, on a first face of a substrate (1), at least:
• one cathode (3) including a lower face (32), an upper face (33) and a side wall (31) directed in the stacking direction from the lower face (32) to the upper face (33),
• one electrolyte (4),
• one anode (5),
**characterised in that** it comprises:
• forming a coating portion surrounding, and in contact with, the entire side wall (31) of the cathode (3), without covering the upper face (33) of the cathode (3), the coating portion comprising:
i. forming a coating layer so as to completely cover the cathode (3);
ii. thinning the coating layer until the upper face (33) of the cathode (3) is exposed, the thinning comprising at least one polishing phase,
• forming at least one electrical connection element (9),
• thinning the support (1) by a second face (12) of the support (1) which is opposite the first face (11),
the polishing being configured to expose the at least one electrical connection element (9) on the upper face (33) of the coating portion and the thinning of the support (1) being configured to expose the at least one electrical connection element (9) on the second face (12) of the support (1).

10. The method according to the preceding claim, wherein forming a coating layer comprises forming an encapsulating layer (8) made of a first material on, and in contact with, the cathode (3), then forming a main layer (7) made of a second material, different from the first material, on, and in contact with, the encapsulating layer (8).

11. The method according to the preceding claim, wherein the first material is selected to be more mechanically resistant to polishing than the second material.

12. The method according to one of claims 10 to 11, wherein the polishing is applied to the main layer (7), using the encapsulating layer (8) as a polishing stop layer.

13. The method according to the preceding claim, comprising etching the encapsulating layer (8), after polishing, to expose the upper face (33) of the cathode (3) .

14. The method according to one of claims 9 to 11, wherein the polishing is applied until the upper surface (33) of the cathode (3) is exposed.
